# EUROPÄISCHE PATENTSCHRIFT

(11) **EP 1 665 492 B1**
(45) Veröffentlichungstag und Bekanntmachung des Hinweises auf die Patenterteilung: **17.01.2007**
(21) Anmeldenummer: 04786190.1
(22) Anmeldetag: 24.08.2004
(51) Int. Cl.: H02H 7/22, H02H 1/06

(54) **SCHALTUNGSANORDNUNG ZUR SCHNELLAUSSCHALTUNG VON NIEDERSPANNUNGS-LEISTUNGSSCHALTERN**
CIRCUIT ARRANGEMENT FOR RAPIDLY SWITCHING OFF LOW-VOLTAGE CIRCUIT BREAKERS
CIRCUIT DE COUPURE RAPIDE D'INTERRUPTEURS BASSE TENSION

(30) Priorität: 12.09.2003 DE 10343339
(43) Veröffentlichungstag der Anmeldung: 07.06.2006
(73) Patentinhaber: SIEMENS AKTIENGESELLSCHAFT, 80333 München (DE)
(72) Erfinder: BUXTON, Clifford, A., Bellefontaine, OH 43311 (US); LIEBETRUTH, Marc, 16548 Glienecke (DE); RÖHL, Wolfgang, 13503 Berlin (DE); NEIDHARDT, Klaus, 14195 Berlin (DE); PANCKE, Andreas, 13507 Berlin (DE)
(86) Internationale Anmeldenummer: PCT/DE2004/001908
(87) Internationale Veröffentlichungsnummer: WO 2005/027296

(56) Entgegenhaltungen:
- US-A- 4 380 785
- US-A- 4 603 367

## Beschreibung

Die Erfindung betrifft eine Schaltungsanordnung zur Schnellausschaltung von Niederspannungs-Leistungsschaltern mit elektronischer Auslöseeinheit, indem ein im Normalbetrieb im Kurzschluss betriebenes Schaltelement, zu dem ein schneller Auslösemagnet des Niederspannungs-Leistungsschalters parallel geschaltet ist, von einem Strom beaufschlagt wird, der dem durch den Niederspannungs-Leistungsschalter überwachten Strom proportional ist, und der Kurzschluss dieses Schaltelementes aufgehoben wird, wenn der durch den Niederspannungs-Leistungsschalter überwachte Strom einen festgelegten Schwellwert erreicht.

Bei hohen Strömen, zum Beispiel durch einen Kurzschluss im Netz bedingt, kann auch eine unverzögerte Ausschaltung eines Niederspannungs-Leistungsschalters noch zu langsam sein, da die Signalverarbeitung im Mikroprozessor des elektronischen Auslösers einige Zeit benötigt. Bei Niederspannungs-Leistungsschaltern, bei denen die Energie für die Auslöseeinheit über weitere Stromwandler und Gleichrichter aus dem Netz selber bezogen wird, steht außerdem bei Inbetriebnahme des Leistungsschalters noch keine Energie zur Verfügung, solange ein zugehöriger Ladekondensator noch nicht aufgeladen ist. Es wurde deshalb bereits vorgeschlagen, bei Erkennen eines hohen Stromes im Netz diesen direkt auf den Auslösemagneten des Leistungsschalters kommutieren zu lassen. Dazu werden die Sekundärseiten der für die Energieversorgung der Auslöseeinheit vorgesehenen Stromwandler über Brückengleichrichter und über einen Kurzschlusspfad eines Schaltelementes an die Auslöseeinheit'geschaltet. Der schnelle Auslösemagnet liegt parallel zu dem Schaltelement, zum Beispiel einem Reedrelais, einem Transistor, angesteuert aus einer Rogowskispule, einem Feldsensor o.ä., und ist bei Normalbetrieb, kurzgeschlossen. Erst bei hohen Kurzschlussströmen im Netz, zum Beispiel 35 kA, öffnet der parallele Kurzschlusspfad, so dass der schnelle Auslösemagnet aktiviert wird.

Eine solche Schaltungsanordnung ist aus US 4 380 785 bekannt.

Die Schaltung erfordert einen Eingriff in den Strompfad der Auslöseeinheit und ist deshalb für eine Nachrüstung bestehender Anlagen nicht geeignet.

Der Erfindung liegt die Aufgabe zugrunde, eine Schaltungsanordnung zur Schnellauslösung von Niederspannungs-Leistungsschaltern anzugeben, die sich auch für eine Nachrüstung eignet. Die Energieversorgung soll weiterhin aus den bisher benutzten Energiewandlern kommen. An der elektronischen Auslöseeinheit sollen keine Änderungen vorgenommen werden.

Erfindungsgemäß wird die Aufgabe gelöst durch die Merkmale des Anspruchs 1.

Danach ist in Reihe mit den Stromeingängen der elektronischen Auslöseeinheit jeweils ein Transformator geschaltet. Die Sekundärseiten dieser Transformatoren sind über Brückengleichrichter auf der Gleichspannungsseite untereinander sowie mit dem Schaltelement in Reihe geschaltet. Der parallel zu dem Schaltelement geschaltete schnelle Auslösemagnet ist - wie bekannt - mit dem parallel liegenden Kurzschlusspfad des Schaltelementes bei Normalbetrieb kurzgeschlossen. Erst bei hohen Kurzschlussströmen im Netz öffnet der parallele Kurzschlusspfad, so dass der schnelle Auslösemagnet aktiviert wird.

Die Transformatoren sorgen für die erforderliche Potentialtrennung und können ein Übersetzungsverhältnis von beispielsweise 1:1 haben.

Die Schaltung kann jederzeit in Schaltern von bestehenden Schaltanlagen nachgerüstet werden. Wie die bisher bereits bekannte Schaltung zur Schnellauslösung eines Niederspannungs-Leistungsschalters hat sie den Vorteil, dass die Auslösung bei einem Kurzschluss im überwachten Netz sehr schnell und selbst dann erfolgt, wenn der Leistungsschalter beim Einschalten auf einen Kurzschluss schaltet.

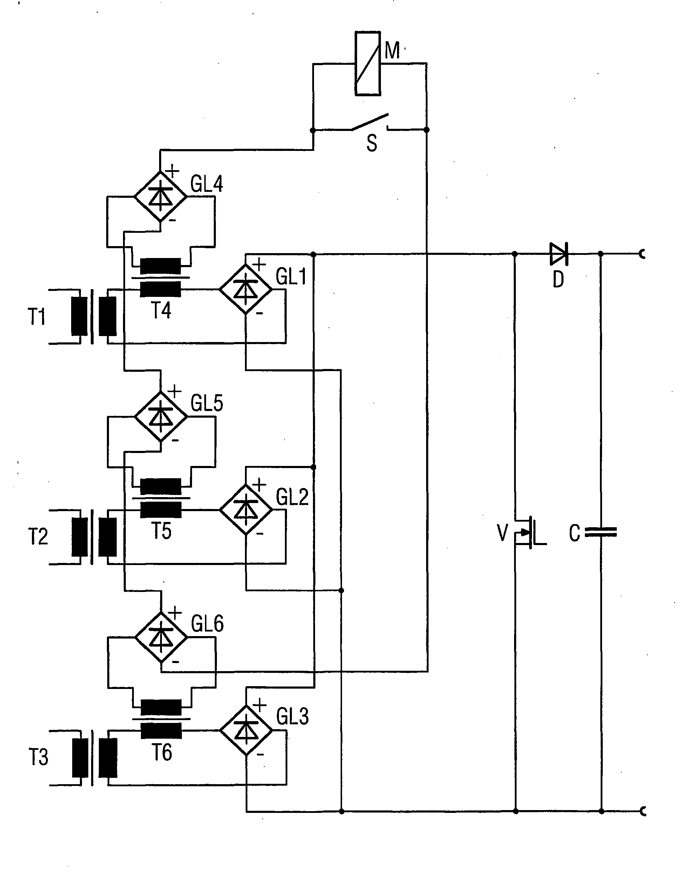

Die Erfindung wird nachfolgend unter Bezugnahme auf die Zeichnung beispielhaft näher erläutert. Die Zeichnung zeigt ein Prinzipschaltbild der erfindungsgemäßen Schaltungsanordnung.

In der Zeichnung ist schematisch ein Teil einer elektronischen Auslöseeinheit für einen Niederspannungs-Leistungsschalter an einem dreiphasigen Netz dargestellt. Die Sekundärseiten von Stromwandlern T1, T2, T3 bilden zusammen mit Brückengleichrichtern GL1, GL2, GL3 die Stromversorgung für einen hier nicht näher gezeigten elektronischen Auslöser. Die Gleichspannungsausgänge der Brückengleichrichter GL1, GL2, GL3 sind parallel geschaltet und führen auf einen Ladekondensator C. Die Spannung am Ladekondensator C wird von einem Schalttransistor V geregelt. Eine Diode D verhindert die Entladung des Ladekondensators C bei angesteuertem Schalttransistor V. Der Ladekondensator C sorgt dafür, dass die Funktion des nachgeschalteten Auslösers auch bei Stromunterbrechungen oder kurzzeitigen Niedrigströmen im Netz aufrechterhalten bleibt.

In Reihe mit den Stromeingängen der elektronischen Auslöseeinheit ist jeweils ein Transformator T4, T5, T6 geschaltet. Die Sekundärseiten dieser Transformatoren T4, T5, T6 sind über Brückengleichrichter GL4, GL5, GL6 auf der Gleichspannungsseite untereinander sowie mit einem Schaltelement S in Reihe geschaltet. Parallel zu dem Schaltelement S ist - wie bekannt - ein schneller Auslösemagnet M des zugehörigen Niederspannungs-Leistungsschalters angeordnet.

Das hier nur schematisch gezeigte Schaltelement S kann ein Reedrelais, ein Transistor, ein Feldsensor o.ä. sein. Es ist im Normalbetrieb kurzgeschlossen beziehungsweise wird es im Kurzschluss betrieben. Angesteuert wird das Schaltelement S durch den Auslösestromkreis, zum Beispiel eine hier nicht gezeigte Ansteuerschaltung für einen Schalttransistor, der das Schaltelement S repräsentiert.

Beim Überschreiten eines vorgegebenen Ansprechwertes wird der Kurzschluss des Schaltelementes S aufgehoben und der Strom kommutiert auf den Auslösemagneten M, der die schnelle Auslösung des Niederspannungs-Leistungsschalters bewirkt.

## Patentansprüche

1. Schaltungsanordnung zur Schnellausschaltung von Niederspannungs-Leistungsschaltern mit elektronischer Auslöseeinheit, bei dem ein im Normalbetrieb im Kurzschluss betriebenes Schaltelement (S), zu dem ein schneller Auslösemagnet (M) des Niedersparinungs-Leistungsschalters parallel geschaltet ist, von einem dem durch den Niederspannungs-Leistungsschalter überwachten Strom proportionalen Strom beaufschlagt ist, sowie eine Überwachungsschaltung für den durch den Niederspannungs-Leistungsschalter überwachten Strom, mit der der Kurzschluss dieses Schaltelementes (S) bei Erreichen eines festgelegten Schwellwertes aufgehoben wird,
**dadurch gekennzeichnet, dass**
in Reihe mit den Stromeingängen der elektronischen Auslöseeinheit jeweils ein Transformator (T4, T5, T6) geschaltet ist, deren Sekundärseiten über Brückengleichrichter (GL4, GL5, GL6) auf der Gleichspannungsseite untereinander sowie mit dem Schaltelement (S) in Reihe geschaltet sind.

2. Schaltungsanordnung nach Anspruch 1,
**dadurch gekennzeichnet, dass**
die Transformatoren (T4, T5, T6) ein Übersetzungsverhältnis von 1:1 haben.

## Claims

1. Circuit arrangement for rapidly tripping low-voltage circuit breakers having an electronic tripping unit, in the case of which a switching element (S), which is operated in the short circuit during normal operation and which is connected in parallel with a rapid-response tripping magnet (M) of the low-voltage circuit breaker, has a current applied to it which is proportional to the current monitored by the low-voltage circuit breaker, and a monitoring circuit for the current monitored by the low-voltage circuit breaker, which monitoring circuit is used to cancel the short circuit across this switching element (S) when a fixed threshold value is reached, **characterized in that** in each case one transformer (T4, T5, T6) is connected in series with the current inputs of the electronic tripping unit, the secondary sides of said transformers being connected in series with one another on the DC voltage side via bridge rectifiers (GL4, GL5, GL6) and with the switching element (S).

2. Circuit arrangement according to Claim 1, **characterized in that** the transformers (T4, T5, T6) have a transformation ratio of 1:1.

## Revendications

1. Agencement de circuit pour la coupure rapide de disjoncteurs basse tension, comprenant une unité de déclenchement électronique, dans lequel un élément de commutation (S) qui fonctionne en court-circuit dans le mode de fonctionnement normal et avec lequel est monté en parallèle un aimant (M) de déclenchement rapide du disjoncteur basse tension, est alimenté avec un courant proportionnel au courant surveillé par le disjoncteur basse tension, l'agencement comprenant également un circuit de surveillance pour le courant surveillé par le disjoncteur basse tension, ce circuit de surveillance interrompant le court-circuit dudit élément de commutation (S) lorsqu'on atteint une valeur de seuil fixée,
**caractérisé en ce qu'**avec chacune des entrées de courant de l'unité de déclenchement électronique, est monté en série respectivement un transformateur (T4, T5, T6), les côtés secondaires de ces transformateurs étant montés en série, par l'intermédiaire de redresseurs en pont (GL4, GL5, GL6), sur le côté tension continue, entre eux ainsi qu'avec l'élément de commutation (S).

2. Agencement de circuit selon la revendication 1,
**caractérisé en ce que** les transformateurs (T4, T5, T6) ont un rapport de transformation de 1:1.
